# EUROPEAN PATENT SPECIFICATION

(11) **EP 4 559 993 B1**
(45) Date of publication and mention of the grant of the patent: **16.09.2026**
(21) Application number: 24213506.9
(22) Date of filing: 18.11.2024
(51) Int. Cl.: C10B 53/07, C10G 1/00, C10G 1/10

(54) **PRODUCTION OF RUBBER COMPOSITIONS FROM END OF LIFE TIRES**
HERSTELLUNG VON KAUTSCHUKZUSAMMENSETZUNGEN AUS LEBENSDAUERREIFEN
PRODUCTION DE COMPOSITIONS DE CAOUTCHOUC À PARTIR DE PNEUS DE FIN DE VIE

(30) Priority: 21.11.2023 US 202318516388
(43) Date of publication of application: 28.05.2025
(73) Proprietor: The Goodyear Tire & Rubber Company, Akron, OH 44316 (US)
(72) Inventor: YANG, Xiaoping, 44241 Streetsboro (US); ANYFANTAKI, Karmena Izabela, 7257 Helmsange (LU); HUA, Kuo-Chih, 44286 Richfield, Ohio (US)
(74) Representative: Leslie, Edward

(56) References cited:
- TW-U- M 628 635
- US-A1- 2018 245 001
- US-A1- 2022 325 185
- US-B2- 10 494 573

## Description

### BACKGROUND

The exemplary embodiment relates to a method for conversion of end of life tires to starting materials useful in the formation of new tires.

The generation end of life tires (ELT) has grown significantly in recent years. Various proposals have been made for recycling the materials in tires, however, the amount that has been recycled into useful materials has decreased. Conventionally, recycled materials from ELT, such as reclaimed rubber crumbs and pyrolysis carbon black, have been used as raw materials in rubber tires. However, such additives tend to reduce the mechanical properties and performance of the tire when used in significant amount and in combination with virgin materials, due to large particle size, and poor quality.

Pyrolysis has been used for conversion of waste materials, such as plastics, into oil. However, pyrolysis oils tend to be contaminated with impurities, which need to be removed to create a useable oil. For example, coke and char formation during pyrolysis leads to contamination of pyrolysis oils. Additionally, due to secondary reactions, the aromatic content, including polar aromatics, can be substantial, which can be undesirable in oils.

There remains a need for a system and method for converting end of life tires into feedstock materials for producing new tires in an efficient manner that does not impact the quality of the tires produced. The exemplary system and method not only provide a value-added route for end of life tire recycling, but also converts waste into high quality feedstocks for new tires and achieve circular economy.

The following references relate generally to conversion of waste materials:
U.S. Pat. No. 10,391,474 B2 describes a process for preparing a hydrocarbon fuel from waste rubber. The process involves charging a reactor with a slurry formed from the waste rubber and a fluid medium, such as water, and catalyst, pressuring the reactor with hydrogen, and heating the mixture at a predetermined temperature, to attain an autogenously generated pressure, and for a predetermined time period to obtain a reaction mass including the hydrocarbon fuel. After cooling, the hydrocarbon fuel is separated from the reaction mass.

U.S. Pat. No. 10,072,225 B2 describes a process for catalytic hydrothermal conversion, at sub-critical temperatures, of organic material into hydrocarbon based fuels, such as oil, and for recovering alkali salts and water-soluble organics from water effluents from the conversion processes. The organic material may be a waste stream such as household waste, municipal solid waste, paper waste, auto shredder waste, plastics, rubbers, scrap tires, used oils, fats, and organic solvents.

U.S. Pat. No. 9,598,552 B2 describes rubber compositions containing carbon black produced from a feedstock oil.

U.S. Pub. No. 20220380682 A1 describes vaporizing a fluid product stream to generate a vapor including hydrocarbon products, steam, and gas.

U.S. 20210146334 A1 describes generation of bio-products from organic matter feedstocks in a continuous flow reactor.

U.S. Application Ser. No. 17/936,112, filed on September 28, 2022, describes a conversion of ELT to syngas, which is used in the production of additives for new tires.

Document US 2022/325185 A1 represents a method according to the state of the art treating polymeric materials including tyre rubbers to produce carbon black, wax and oils.

### SUMMARY OF THE INVENTION

The invention relates to a method in accordance with claim 1, and to an apparatus in accordance with claim 12.

Dependent claims refer to preferred embodiments of the invention.

In accordance with a first preferred embodiment, a method of recycling waste tires into new tires with a high efficiency includes subjecting a waste tire material to a hydrothermal cracking process to generate a solid component and a fluid component, the fluid component comprising oil and water. The fluid component may also include a gaseous hydrocarbon component which can be recovered for use as a fuel. The method further includes recovering at least one filler material from the solid component, the at least one filler material being selected from the group consisting of carbon black, silica, and mixtures thereof. The oil in the fluid component is fractionated to generate at least two oil fractions. At least a first portion of a first of the oil fractions is refined to isolate at least one of a wax and a process oil. Optionally, a second portion of the first of the oil fractions is used as a feedstock for forming carbon black. The method further includes steam cracking a second of the oil fractions to form precursors for forming components of rubber tire, and forming the components of the tire from the precursors, the least one filler material, and the at least one the wax and the process oil, whereby at least 50 wt. % of a new tire is derived from the waste tire material.

In various preferred aspects of the method:
At least 60 wt. %, or at least 80 wt. %, or at least 90 wt. % of the new tire may be derived from the waste tire material.

The waste tire material may consist of shredded tires.

The hydrothermal cracking process may be carried out in a reactor at a temperature of at least 500°C and a pressure of at least 18,000 kPa. The hydrothermal cracking process may be carried out at a temperature of up to 750°C.

The hydrothermal cracking process may use water as the only catalyst.

The first of the oil fractions may have an Atmospheric Equivalent Temperature (AET) of at least 350°C and the second of the oil fractions may have an AET of below 350°C.

The precursors may include a conjugated diene, such as butadiene.

The forming of the components of the tire may include one or more of synthesizing a synthetic rubber from the precursors; synthesizing a resin from the precursors; and synthesizing at least one of an antioxidant, an antiozonant, and a curative from the precursors. The synthesis of the antioxidant may include synthesizing at least one of aniline and an alkyl-substituted aniline from the precursors and synthesizing 4-aminodiphenylamine from the at least one of the aniline and the alkyl-substituted aniline. The forming of the components of the tire may include synthesizing a reinforcement material from the precursors. The reinforcement material may include at least one of polyethylene terephthalate and Nylon.

The forming of the components of the tire may include forming a tire tread.

In accordance with another preferred embodiment, an apparatus for recycling waste tires includes a grinder which grinds waste tires or parts thereof to form a waste tire material; a hydrothermal cracking reactor which converts the waste tire material to a mixture comprising a solid component and a fluid component, the fluid component including oil and water; a depressurizing component which reduces a temperature and a pressure of the fluid component; a separator which separates the oil from the water in the fluid component; and a fractionating system which fractionates the oil to generate at least two oil fractions, a first of the oil fractions being suitable for producing a process oil and a wax, a second of the oil fractions being suitable for producing precursors for forming components of a rubber tire. The apparatus enables at least 50 wt. %, or at least 80 wt. % of a new tire to be derived from the waste tire material.

The apparatus includes a heated conduit which connects the grinder and the hydrothermal cracking reactor. The apparatus further includes an inlet to the heated conduit by which superheated water mixed with the waste tire material.

In accordance with another preferred embodiment, a method of recycling waste tires includes subjecting a waste tire material to a hydrothermal cracking process to generate a solid component and a fluid component, the fluid component comprising oil and water and optionally a gaseous hydrocarbon component; recovering at least one filler material from the solid component, the at least one filler material being selected from carbon black, silica, and mixtures thereof; fractionating the oil in the fluid component to generate at least two oil fractions; refining at least a first of the oil fractions to isolate a wax and a process oil and/or using the first of the oil fractions to produce carbon black; steam cracking at least a second of the oil fractions to form precursors for forming components of rubber tire, the precursors including a conjugated diene and at least one aromatic monomer; synthesizing at least one elastomer from the conjugated diene; synthesizing a resin from at least one of the conjugated diene and the at least one aromatic monomer; synthesizing at least one additive from the precursors, the at least one additive being selected from an antioxidant, an antiozonant, and a curative; forming a rubber composition comprising the wax, the process oil, the at least one elastomer, the resin, the at least one additive, and the least one filler material; and curing the rubber composition to form a component of a tire.

The method may further include synthesizing a reinforcing material from the precursors, and incorporating the reinforcing material in the component of the tire.

### BRIEF DESCRIPTION OF THE DRAWINGS

FIGURE 1 is a schematic diagram of a circular pathway for recycling of end of life tires; and
FIGURE 2 illustrates an apparatus which can be used in a method for recycling of end of life tires.

### DETAILED DESCRIPTION OF PREFERRED EMBODIMENTS OF THE INVENTION

An integrated method and system for conversion of waste tires (e. g., end of life tires) to starting materials useful in the formation of new tires with a high efficiency. The method allows a new tire to be made with at least 80% by weight, or at least 90% by weight of the materials used in forming the tire being recycled from waste tires. Additionally, the materials formed from waste tires are of high quality, in terms of physical and chemical properties, allowing them to be used interchangeably with conventional tire materials derived from fossil fuel sources, without a loss in tire performance.

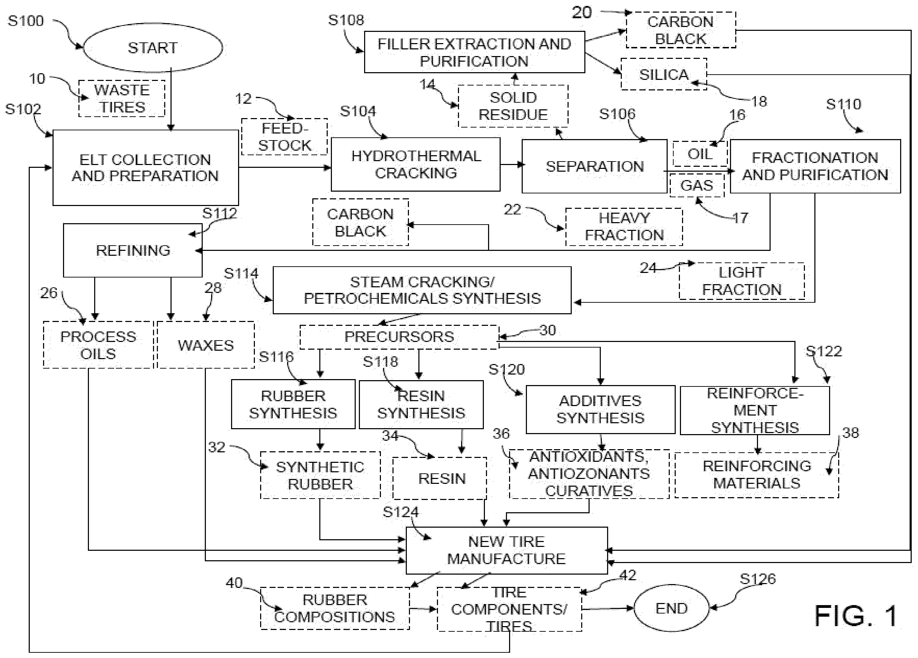

FIGURE 1 is an overview of a method for recycling waste tires. The recycling process employs hydrothermal conversion. The method begins at S100. At S102, waste tires 10 are prepared for hydrothermal conversion. This may include stripping out metal components of the tires (which may be processed separately). The rubber material in the tires is ground, extruded, or otherwise comminuted to produce a waste tire material, which may be in the form of crumbs of a suitable size. The waste tire material serves as a feedstock 12 for hydrothermal conversion.

At S104, the feedstock 12 is subjected to hydrothermal cracking. This process generally entails applying heat to the waste tires in the presence of water under or near supercritical state, optionally in the presence of a catalyst. The output of this process includes a solid residue 14 and a fluid which may include a non-solid oil-containing component 16 and a combustible gas 17, such as a mixture of low molecular weight hydrocarbons.

At S106, the solid residue 14 is separated from the fluid components, namely, the oil-containing component 16, gas phase 17, and water.

At S108, the solid residue 14 is processed to extract and purify fillers useful in tire formation, in particular silica 18 and carbon black 20.

At S110, the remaining oil-containing component 16 is processed by fractionation and purification to produce one, two, or more oil fractions, such as a higher boiling heavy fraction 22 and a lower-boiling light fraction 24, or multiples thereof. Gas 17 may also be recovered from the fluid in this stage.

At S112, the heavy fraction(s) 22 may undergo a refining process to isolate oils 26 and waxes 28 suitable for use in forming a rubber composition. The heavy fraction(s) can also be used to produce carbon black through a furnace process.

At S114, the lighter fraction(s) 24 may undergo steam cracking to produce precursors 30 (e.g., monomers and oligomers), which can be used to produce polymers and additives used in rubber compositions.

At S116, conjugated dienes and/or aromatic monomers in the precursors 30 may be used to form synthetic rubber polymers 32, such as polybutadiene (PBD), styrene-butadiene rubber (SBR), such as solution polymerized styrene-butadiene rubber (SSBR) and emulsion polymerized styrene-butadiene rubber (ESBR), polyisoprene, and hydrogenated and/or functionalized derivatives thereof.

At S118, some of the precursors 30 may undergo resin synthesis to form hydrocarbon resins 34, such as alpha methyl styrene (AMS) resin.

At S120, some of the precursors 30, may undergo additives synthesis to form tire protection additives 36, such as antioxidants and antiozonants and curatives, such as cure accelerators.

At S122, some of the precursors 30, may undergo reinforcement synthesis to form tire reinforcing materials 38.

At S124, one or more rubber compositions 40 suited to forming tires, or tire components, such as treads, carcasses, inner liners, belts, and the like, may be formed, which incorporate some or all of the described products 18, 20, 26, 28, 32, 34, 36, 38. The rubber compositions may be formed into new tires 42. As will be appreciated, compounds and polymers for forming other components may also be formed, such as polyester belts, and the like.

The method ends at S126, or may return to S102 to begin the cycle again.

By optimizing the production of the various products 18, 20, 26, 28, 32, 34, 36, 38, a significant proportion of the waste tires 10 can be converted to new tires, such as least 50 wt. %, or at least 60 wt. %, or at least 80 wt. %, or at least 90 wt. %, or at least 94 wt. %, e.g., without the need for obtaining some of the ingredients from fossil fuels, or with minimal use of such ingredients. For example, 50-95 wt. %, or 60-90 wt. %, or 80-90 wt. % of the waste tires are converted to new tires. Similarly, a new tire may be formed with at least 50 wt. %, or at least 60 wt. %, or at least 70 wt. %, or at least 80 wt. %, or at least 90 wt. % or at least 94 wt. % of its ingredients being formed from recycled tires, in particular, the products 18, 20, 26, 28, 32, 34, 36, 38 of the recycling of the waste tires 10, such as 50-95 wt. %, or 60-90 wt. %, or 80-90 wt. %.

Further details on some of these steps will now be provided.

### Preparation of Waste Tires (S102)

The waste tire material 12 employed in the method may include vehicle tires (and parts thereof), such as automobile tires, truck tires, aircraft tires, bicycle tires, motorbike tires, off-road vehicle tires, and the like, in particular tires containing natural and/or synthetic rubber(s), including pneumatic and non-pneumatic tires.

The bulk starting material is thus preformed tires (and/or rubber-containing components thereof) 10, which may have been scrapped after use. The starting material 10 may be a combination of rubber, such as natural rubber and synthetic rubber(s), e.g., butadiene rubber, styrene butadiene rubber, isoprene rubber, and/or halogenated polyisobutylene rubber (totaling about 40-60 wt. % of the tire); fillers, such as carbon black and silica (totaling about 10-40 wt. % of the tire); reinforcing materials, such as steel cords, which form belts within the tread areas, and fabric reinforcing materials, such as polyester, rayon, or nylon cords which form body plies within the rubber layers (totaling about 10-25 wt. % of the tire); and rubber-forming additives, such as antioxidants, antiozonants, cure agents, such as sulfur, and vulcanization accelerators and activators.

The tires are shredded, extruded or otherwise comminuted, resulting in granules of an average dimension of less than about 8 cm, or less than 1 cm, e.g., a few mm. Metal cords and some of the fabric may be removed prior to or during this process.

In one embodiment, the waste tire material consists entirely of shredded tires. In another embodiment, other feedstocks that are rich in the elements hydrogen and carbon may be combined with the waste tires. For example, other rubber products, such as rubber-based hoses, biomass (plant-derived materials), plastics, and the like may be incorporated in feedstock 12. In the exemplary embodiment, a ratio, by dry weight, of these other feedstocks, in total, to the shredded tire feedstock used in the hydrothermal cracking process S104 is less than 1:1, or less than 0.5:1, or less than 0.1:1.

### Hydrothermal Conversion (S104)

Various methods can be used for hydrothermal conversion of the feedstock 12. In general, the comminuted tires are treated with superheated steam in a reactor, which breaks down the comminuted tires into a fluid component 16, which includes a viscous oil-based liquid containing a mixture of hydrocarbons and optionally a gaseous hydrocarbon component, and a solid component or residue 14.

Parameters such as temperature, pressure, and feed-to-steam ratio in the hydrothermal cracking reactor can influence the mixture of products formed. At moderate temperatures (about 500°C), the cracking reaction produces an oil component 16 with a large proportion of aliphatic hydrocarbons where isoprene and D-limonene, in combination, may account for about 40 wt. % of the products. At higher temperatures (about 700 °C), aromatic products tend to form predominantly, e.g., via Diels-Alder reactions involving isoprene and D-limonene. Accordingly, a suitable reaction temperature, e.g., in the range of 500 to 750 °C and a pressure of at least 18000 kPa in the reactor may be selected to achieve a desired mix of reaction products in the oil fraction.

In one embodiment a method as described in U.S. Pub. No. 20220380682 A1 is used for the hydrothermal cracking. This method uses a polymeric feedstock, which in the present case can be crumbed or extruded tires. The feedstock is combined with an aqueous solvent, such as superheated water, to produce a reaction mixture. Water serves as the only catalyst in this method. The reaction mixture is treated in a reactor apparatus at a reaction temperature and a reaction pressure over a period of time suitable for conversion of at least some of the polymeric material present in the reaction mixture into a fluid product stream.

In this method, the fluid product stream is rapidly depressurized in a flash vessel from a temperature of at least 350° C and a pressure of at least 180 bar (18,000 kPa) to a much lower pressure, e.g., of less than 25 bar (2500 kPa). The depressurizing converts the fluid product stream to a vapor including hydrocarbon products, steam, and gas, which may be collected in an accumulation apparatus. In one embodiment, The vaporizing provides energy to facilitate fractionation of the vapor into the constituent parts.

There are several useful output materials from this process including a volatile combustible gas mixture 17, oil 16, and a solid residue 14. The gas mixture can be used as fuel to provide heat and/or electricity to the recycling facility, such as providing an energy source for heating the aqueous solvent. The oil 16 and solid residue 14 can be used to generate high quality tire raw materials. The solid material 14 has a high ash content, including carbonaceous and siliceous materials, from which carbon powder and silica can be readily extracted.

The hydrothermal conversion process produces oil with a higher quality than pyrolysis oil, due to the presence of water. The oil produced is lighter and contaminants, such as sulfur, chlorine, and oxygen, automatically end up in the water phase, leading to less contamination in the hydrocarbon products. As a result, the oil produced is better suited to use as circular naphtha than pyrolysis oil, since it requires little or no purification/treatment.

In another embodiment, a catalyst other than water may be employed in the hydrothermal cracking, such as zirconia, alumina, and/or a sodium and/or potassium salt, such as a potassium or sodium carbonate or bicarbonate, as described, for example, in U.S. Pat. No. 10,072,225 B2.

In another embodiment, a predetermined amount of an oxidizing agent is introduced to the reactor to control the extent to which the reaction mixture is heated. The oxidizing agent may include one or more of oxygen, hydrogen peroxide, and sodium nitrate, as described, for example, in US Pub. No. 20100287825 A1.

### Separation (S106)

The solid residue 14 is separated from the oil and water phases and any gas phase. This may employ simple phase separation techniques or may be supplemented with additional techniques, such as adding demulsifiers to cause metals to move from the oil to the water phase, use of an absorbent, such as an acidic ion-exchange resin, to remove metals, or active carbon, to remove alcohols, aldehydes, ketones, ethers, and other carboxylic acids from the oil phase, and the like.

The process water used in the hydrothermal treatment step can be recovered, purified if necessary, and reused. The purification may include extraction of contaminants by a coagulation-flocculation process. In this process, the process water may be mixed with a coagulation agent or agents. Examples of coagulating agents include inorganic coagulants, such as aluminum sulfate and ferric chloride, organic coagulants, such as polyamines, polydiallyldimethylammonium chloride (polyDADMAC), and tannins, and mixtures thereof. Alternatively, or additionally, electrocoagulation, which is based on passing a current through submerged electrodes, may be used. This causes a chemical reaction to occur in the water, which can result in the formation of metal hydroxides or other coagulants. In general, the coagulants cause suspended particles and other contaminants to bind together into larger particles/flocculations that form a sediment that can be filtered out or otherwise separated from the water.

Another method of removing contamination is by adsorption onto a solid adsorbent, such as activated carbon, zeolites, or char.

### Filler Extraction and Purification (S108)

Ash-like components and inorganic fillers may be largely carried through the process and can be separated from the other products by suitable means (e.g., fractional distillation). The solid residue can be treated to extract ash from the solid carbon to recover silica and treating solid carbon to produce recycled carbon black with improved performance.

Carbon black can be produced, for example, by milling the solid material to about 10 µm by applying a jet mill. The milled material is then purified using silica/zinc oxide extraction to increase the carbon content. Alternatively, or additionally, ASTM-Grade carbon black (e.g., N347, N550, N660, etc.) can be produced in a furnace reactor type pilot plant starting with the oil.

The term "silica" refers to silicon dioxide, SiO₂ (which may contain minor amounts of impurities, generally less than 1 wt. %, resulting from the process in which the silica is formed). The silica may be a precipitated silica which is formed by digesting amorphous silica with sodium hydroxide to form sodium silicate and precipitating silica from sodium silicate by reaction with an acidifying agent, such as sulfuric acid or carbon dioxide. The resulting precipitate is washed and filtered. Other methods of preparing particulate silica are known.

### Fractionation and Purification (S110)

The oil may be purified and upgraded before being used as feedstock for process oil and wax separation and/or petrochemical synthesis. The purification may include one or more of 1) removal of impurities such as oxygen, nitrogen, and sulfur atoms from the oil, 2) hydrogenation to reduce the level of unsaturation, and 3) cracking to breakdown longer molecules.

The oil 16 can be distilled and fractionated into two or three fractions. These may include a heavy fraction 24, a light fraction 22, and optionally a second heavy fraction, which may be heavier than the heavy fraction. In one embodiment, the heavy fraction 24 has an Atmospheric Equivalent Temperature (AET) of at least 350°C, such as in a range of 350° to 500°C, and the light fraction has an AET of less than 350°C, such as in a range of 20°C to 340°C.

The heaviest fraction can be blended with oil derived from fossil fuel or biological waste and processed to produce high quality tire grade carbon blacks 20, as an alternative, or in addition to that produced from the solid residue 14.

The fractionation and purification step S110 may include removal of contaminants from the oil, such as acids, aromatics, oxygenates, nitrogen containing compounds, traces of sulfur and metals, etc. depending on their partitioning in the water phase separation.

### Refining (S112)

The heavy fraction 22 (fractionated at an AET of 350°C or higher) can be refined to produce processing oil 26 and waxes 28 used in tires and other applications. Wax can serve as an antiozonant as well as a processing aid.

Extractive dearomatisation may be performed in the refining and/or prior to or during the steam cracking steps S112, S114. Some of the extractants may be used later in the subsequent synthesis steps. Solvents, such as sulfolane, furfural, N-formylmorpholine, dimethyl sulfoxide (DMSO), and glycols can be used for dearomatisation.

In one embodiment, some or all of the heavy fraction 22 may be converted to carbon black, e.g., by heating in a furnace. The furnace may be heated with the combustible gas 17.

### Steam Cracking and Synthesis of Petrochemicals (S114)

The light fraction 24 (e.g., fractionated at an AET of 100-200°C) can be used to form a variety of petrochemicals 32, 34, 36, 38, and/or their precursors 30, using, for example, purification, refining, steam cracking, and petrochemical synthesis processes. Many of these processes can be conventional processes used for forming petrochemicals. As a result, little or no equipment/process modification may be needed.

Steam cracking may be performed in the presence of a catalyst, such as one or more of cobalt, molybdenum, nickel, palladium, platinum, and oxides thereof. Examples of catalysts for the cracking reactions may include a combination of at least two active metals, where at least one metal is from group VIB and/or at least one metal is from group VIII of the periodic table of elements. Combinations such as cobalt-molybdenum (CoMo), nickel-molybdenum (NiMo) and nickel-tungsten (NiW) are exemplary metal combinations. The active metals may be incorporated onto a metal oxide support, such as alumina, amorphous silica alumina and/or zeolites arranged in a single catalyst bed or multiple catalyst beds.

Examples of suitable catalysts include Pt/Al₂O₃/SiO₂, Pd/Al₂O₃/SiO₂, Ni/Al₂O₃/SiO₂, NiO/MoO₃, CoO/MoO₃, NiO/WO₂ and mixtures thereof.

Examples of chemicals that are useful precursors 30 for the tire industry include rubber-forming monomers, additive-forming monomers, such as benzene and aniline, which can be derived from benzene, and monomers for forming plastic reinforcements.

Rubber-forming monomers, including hydrocarbons, such as a C₁-C₁₀ alkene, e.g., butadiene, isoprene, and/or isobutylene; vinylarenes, such as styrene; and/or a mixture of liquid hydrocarbons, such as naphtha, can be produced in the cracking process or formed by chemical reaction. Naphtha refers to straight-chain, or aliphatic, hydrocarbons containing 5-10 carbon atoms.

For example, a naphtha steam cracker is configured to heat the naphtha with steam at high temperatures, (e.g., 850° C to 1200° C) to crack the naphtha into smaller hydrocarbon compounds, such as methane, ethane, ethylene, propylene and C4 products, such as conjugated dienes, which can be separated in a series of separation steps, for example, using a series of fractionators.

In particular, naphtha may be converted to conjugated diene(s), such as 1,3-butadiene, which can be used as a monomer for forming butadiene-based elastomers.

Naphtha may also be converted to benzene and alkyl-substituted derivatives thereof. To convert naphtha into benzene, the naphtha may be mixed with hydrogen gas at a temperature of about 450-550°C, and the mixture is passed over a catalyst, such as platinum or rhenium, at above atmospheric pressure, e.g., in the range of 400-600kPa. This process converts aliphatic hydrocarbons to their corresponding aromatic compounds. Benzene can be formed from the hexane in the naphtha and separated from the other hydrocarbons in the mixture by dissolution and/or distillation. Benzene derived from naphtha can also be converted to styrene, e.g., by reaction of benzene with ethylene to produce ethyl benzene, which is then dehydrogenated to produce styrene. The styrene can be used as a monomer for forming butadiene-based elastomers.

Naphtha may also be converted to reinforcing materials, such as polyethylene terephthalate (PET)-based or nylon-based fabrics and cords. Benzene and/or alkyl-substituted benzene produced from naphtha, as described above, may be converted to aniline (and/or an alkyl-substituted aniline). The aniline (and/or the alkyl-substituted aniline) can be converted to one or more rubber forming additives 36, such as anti-degradants (e.g., antioxidants and antiozonants) and vulcanization accelerators.

Various methods are known for synthesizing aniline from benzene. In one embodiment, a two-step method may be employed. In the first step, benzene (and/or a mono, di, or tri-C₁-C₆ alkyl-substituted benzene) is converted to nitrobenzene (and/or a mono, di, or tri-C₁-C₆ alkyl-substituted nitrobenzene). For example, benzene is reacted with an acid mixture of concentrated nitric acid and concentrated sulfuric acid to form nitrobenzene. In the second step, the resulting nitrobenzene is reduced to aniline by a reduction technique such as Béchamp reduction or catalytic reduction. For example, the reduction may include stirring nitrobenzene with hydrochloric acid and powdered iron (as the catalyst) in the presence of hydrogen, at a suitable temperature, such as 100°C.

Catalytic reduction of nitrobenzene to aniline can be performed with a mixture of CO/H₂O as a reducing agent in the presence of a palladium (II) catalyst. See, Krogul-Sobczak, et al., "Reduction of Nitrobenzene to Aniline by CO/H2O in the Presence of Palladium Nanoparticles," Catalysts, 9(5), 404 (2019).

Nitrobenzene can also be selectively reduced to aniline by aqueous methyl formate in the presence of a catalytic system which includes [Ru₃(CO)₁₂], Pd(OAc)₂, tricyclohexylphosphine, and 1,10-phenanthroline. See, e.g., Ben Taleb, et al., "Catalytic reduction of nitrobenzene to aniline with aqueous methyl formate," J. Organometallic Chem., 456(2) 263-2697 (1993).

In another method, aniline is prepared from benzene in a single direct one-step amination using ammonium hydroxide as an ammoniation agent, hydrogen peroxide as oxidant, in the presence of a titanium silicalite-1 (TS-1)-based catalyst, such as TS-1 with Ni, Cu, Ce, or V, at a temperature of 40-80 °C in a suitable solvent, such as acetonitrile, trimethyl carbinol, or N,N-dimethylacetamide. See, e.g., CN 101906045 A to Sichuan University.

### Rubber Synthesis (S116)

Rubber monomers can be used to prepare a variety of elastomers (synthetic rubbers) 32. As examples, PBD is synthesized from butadiene; SBR is synthesized from butadiene and styrene; cis-polyisoprene rubber is synthesized from isoprene; and butyl rubber (an isoprene isobutylene copolymer) is synthesized from isoprene and isobutylene. These synthetic rubbers can be used singly or combined, in suitable amounts, optionally with other elastomers, such as natural rubber, to form the elastomeric content of a rubber composition 40.

PBD with a Mooney viscosity of about 44 ± 4 MU, which can be used in the sidewall and in the tread of a tire, can be synthesized from 1,3-butadiene by a solution polymerization process using a neodymium-containing catalyst.

Styrene-butadiene rubber, with a Tg of about -60 ± 10 °C or about -60 ± 5 °C and a Mooney viscosity of about 50 ± 8 MU, or about 50 ± 4 MU, which can be used in the tread of a tire, can be synthesized by solution polymerization of 1,3-butadiene and styrene.

Bromobutyl rubber with Mooney viscosity of about 30 ± 8 MU or about 30 ± 4 MU and a bromine content of about 1.8 ± 1 wt. %, or about 1.8 ± 0.2 wt. %, which can be used in the innerliner of a tire, can be synthesized from 1,3-butadiene and isoprene by cationic polymerization to produce butyl rubber, which is brominated in a subsequent reaction.

Such synthetic rubbers may be hydrogenated and/or functionalized, as described, for example, in US Pat. No. 7,342,070 B2; US Pub. Nos. 20080287601 A1 and 20220177610 A1; and US Application Serial Nos. 18/155,927; 18/155,835; 18/155,815; and 18/155,799, all filed on January 18, 2023.

For example, an SBR may be functionalized with an alkoxysilane group and optionally at least one of a primary amine group and thiol group. Such an SBR may be obtained by copolymerizing styrene and butadiene, with a primary amino group and/or thiol group and an alkoxysilyl group which are bonded to the polymer chain. In one embodiment, the alkoxysilyl group is an ethoxysilyl group. The primary amino group and/or thiol group may be bonded to any of a polymerization initiating terminal, a polymerization terminating terminal, a main chain of the styrene-butadiene rubber and a side chain, as long as it is bonded to the styrene-butadiene rubber chain. The primary amino group and/or thiol group may be introduced to the polymerization initiating terminal or the polymerization terminating terminal, in that the disappearance of energy at a polymer terminal is inhibited to improve hysteresis loss characteristics.

### Synthesis of Resins (S118)

Benzene, isoprene, and piperylene can be used as precursors for synthesis of several hydrocarbon traction resins, including C4, C5, C9, and C5/C9 resins. C5 resins are generally derived from aliphatic monomers containing an average of five carbon atoms, such as one or more of cyclopentene, 1,3-pentadiene (e.g., cis or trans), 2-methyl-2-butene, cyclopentadiene, dicyclopentadiene (a dimer of cyclopentadiene), and diolefins such as isoprene and piperylene. C9 resins are derived from aromatic olefins containing an average of 9 carbon atoms, such as one or more of vinyl toluene, methylstyrene, such as alpha-methylstyrene, indene, and methylindene. Resins may also be formed from mixtures of the C5 and C9 monomers mentioned above, and are therefore known as C5/C9 copolymer resins. In one embodiment, the C5 fraction used in the C5/C9 resin is predominantly dicyclopentadiene (DCPD). The resin may be hydrogenated, such as a hydrogenated dicyclopentadiene (HDCPD)/C9 resin.

For example, low molecular weight C4 resins can be synthesized from butadiene by anionic polymerization with a lithium derivative e.g., in a batch process and functionalization using aliphatic oxides. Aromatic monomers, such as styrene and alpha methyl styrene, can be polymerized by cationic polymerization using BF₃ as an acid, e.g., in a continuous process.

### Synthesis of Additives (S120)

Aniline is the common feedstock for many rubber curatives and anti-degradants (antioxidants and antiozonants). Benzene, toluene, xylene, ethylbenzene, diethylbenzene, or butylbenzene can be converted to aniline and alkylated derivatives thereof, as described, for example, in U.S. Pat. No. 9,115,047 B2.

The aniline (and/or a mono, di, or tri-C₁-C₆ alkyl-substituted aniline) can be used in the synthesis of cure (vulcanization) accelerators for the vulcanization of rubber and synthesis of anti-degradants/antioxidants.

A cure accelerator is a chemical added into a rubber compound to increase the speed of vulcanization (curing) and/or to permit vulcanization to proceed at lower temperature and with greater efficiency. Cure accelerators can also decrease the amount of sulfur needed for vulcanization.

In one embodiment, the cure accelerator is one which includes a thiazole group (or groups). Example vulcanization accelerators with a thiazole group include 2-mercaptobenzothiazole (MBT) and 2,2'-dibenzothiazyl disulfide. MBT, for example, can be synthesized through the reaction of aniline with carbon disulfide in the presence of sulfur. The process can be carried out as described in U.S. Pat. No. 1,631,871 or U.S. Pat. No. 5,367,082A, for example. Oxidation of the 2-mercaptobenzothiazole formed gives 2,2'-dibenzothiazyl disulfide, as described, for example in U.S. Pat. No. 4,463,178 A.

MBT can be used as an intermediate in the formation of other thiazole group-containing cure accelerators, such as (2-2'-dithiobis(benzothiazole)) and (2-(4-morpholinothio)-benzothiazole), and sulfanemide-group containing accelerators, such as (N,N'-dicyclohexyl-2-benzothiazylsulfenamide), (N-cyclohexyl-2-benzothiazylsulfenamide), (N-tert-butyl-2-benzothiazylsulfenamide), (2-benzothiazylsulfenamide), and the like. For example, U.S. Pat. No. 4,755,608 A and U.S. Pat. No. 4,859,778 A describe processes for preparing (2-2'-dithiobis(benzothiazole)) from MBT. Processes for forming sulfanemides from MBT are described, for example, in U.S. Pat. No. 3,658,808 A.

Other examples of cure accelerators are diaryl guanidines, such as diphenyl guanidine, which can be prepared by reaction of cyanogen chloride with an aqueous solution of aniline (and/or a respective alkyl-substituted aniline) followed by neutralization with sodium hydroxide. This process is described, for example, in U.S. Pat. Nos. 4,898,978 and 4,739,117.

Guanidine-based cure accelerators are often used as secondary accelerators to activate primary accelerators, such as thiazole- and sulfenamide-group containing accelerators. The dosages of the secondary accelerators are generally between 10-40% of the primary accelerator.

An example vulcanization system including one or more of the exemplary vulcanization accelerators may include:
Zinc oxide: 3.0 to 10 phr
Fatty acid(s) e. g., stearic acid: 0.5 to 8 phr
Accelerator(s): 0.3 to 6 phr
Sulfur: 0.5 to 4 phr
where the parts per hundred total rubber (phr) are exemplary.

In one embodiment, at least 20 wt. % or at least 50 wt. % or at least 80 wt. % or up to 100 wt. % of the cure accelerator(s) used in the vulcanization system, is/are derived from petrochemicals produced from hydrothermal cracking of waste tires, e.g., via the conversion of hydrocarbons to aniline (and/or an alkyl-substituted aniline) via benzene (and/or an alkyl-substituted benzene), as exemplified by the methods described above.

Antiozonants, antioxidants, and compounds having both of these functions can be synthesized at S120 from aniline. For example, aniline can be used to form 4-aminodiphenylamine (4-ADPA), which is a dimer of aniline that can be used to form various anti-degradants. Methods for preparing 4-ADPA include:
(a) reaction of p-nitro-chlorobenzene with aniline in the presence of a catalyst to produce 4-nitrodiphenylamine, then reduction of 4-nitrodiphenylamine to 4-aminodiphenylamine with sodium sulfide (see, for example, U.S. Pat. No. 6,815,562);
(b) reaction of formic acid with aniline to prepare formanilide, which in turn reacts with p-nitro-chlorobenzene in the presence of an acid-binding agent, such as potassium carbonate, to produce 4-nitrodiphenylamine. 4-nitrodiphenylamine is reduced by sodium sulfide to form 4-aminodiphenylamine (see, for example, U.S. Pat. Nos. 4,122,118; 4,140,716; 4,155,936; 4,187,248; 4,187,249; 4,196,146; 4,209,463; 4,670,595; 4,614,817; 4,683,332; and 4,782,185);
(c) nitrosation of diphenylamine using a nitrite in an organic solvent to produce N-nitrosodiphenylamine, which is rearranged to 4-nitrosodiphenylamine hydrochloride under the action of anhydrous hydrogen chloride. 4-nitrosodiphenylamine hydrochloride is neutralized with a base to give 4-nitrosodiphenylamine, which is reduced to 4-aminodiphenylamine by sodium sulfide (see, e.g., U.S. Pat. No. 4,518,803);
(d) reacting nitrobenzene and aniline in presence of a complex base catalyst to form a reaction mixture, and hydrogenating the reaction mixture to obtain 4-aminodiphenylamine. An example complex base catalyst includes a tetraalkyl ammonium hydroxide, a tetraalkyl ammonium salt, and an alkali metal hydroxide or oxide, as described, for example, in U.S. Pat. No. 8,293,673 B2; and
(e) direct coupling of aniline and nitrobenzene in the presence of a base to give a mixture of 4-nitrosodiphenylamine and 4-nitrodiphenylamine, accompanied by some azobenzene and phenazine as by-products. The coupling reaction is followed by catalytic hydrogenation in presence of water to give 4-ADPA and regenerated base. The base is separated as part of an aqueous layer which is recycled to the process. 4-ADPA is obtained by fractional distillation of the organic phase (see, e.g., U.S. Pat. Nos. 5,117,063; 5,453,541; 5,608,111; 5,623,088; 5,739,403, 5,977,411; 6,140,538; 6,365,933; 6,495,723; 6,583,320; 6,770,189; 7,084,302; 7,176,333; 7,183,439; and 7,235,694).

Other example methods for preparation of 4-aminodiphenylamine from aniline are described in Králik, et al., "The Story of 4-Aminodiphenylamine," Proc. 6th Int'l Conf. on Chemical Technology, pp. 319-325 (2018).

4-aminodiphenylamine can be reacted with acetone or methyl isobutyl ketone in the synthesis of N-(1,3-dimethylbutyl)-N'-phenyl-1,4-benzenediamine (6PPD). See, e.g., U.S. Pub. No. 20150045584 A1. In one method, diacetone alcohol, which can be synthesized by, for example, aldol condensation of two molecules of acetone, is dehydrated to be converted to mesityl oxide. Then, hydrogenation of the mesityl oxide with a palladium catalyst or the like gives methyl isobutyl ketone, which is reacted with 4-aminodiphenylamine as described above. 6PPD can be used as an antioxidant and/or antiozonant in rubber compounds.

Aniline can also be used as a starting material for the synthesis of other suitable antidegradants, such as trimethyl-dihydroquinolines (TMQs). TMQs are anti-degradants based on polymerized aniline-acetone condensation products. See, for example, U.S. Pat. No. 4,897,482. The individual products differ by the degree of polymerization. Benzenediamines and toluenediamines, such as 1,4-benzene diamine (also called p-phenylenediamine) can be prepared by reacting aniline with ammonia. See, for example, Robert A. Smiley, "Phenylene- and Toluendiamines" in Ullmann's Encyclopedia of Industrial Chemistry, pp. 617-622 (15 June 2000). In the Du Pont process, for example, aniline is diazotized using nitrogen oxides. The diazo compound reacts with excess aniline to produce 1,3-diphenyltriazine, which rearranges under acidic conditions to 4-aminoazobenzene. 4-aminoazobenzene is catalytically cleaved and hydrogenated to give p-phenylenediamine and aniline. The aniline can be recovered and recycled.

Other example antioxidants which can be formed from aniline include quinoline antioxidants, such as 2,2,4-trimethyl-1,2-dihydroquinoline polymers (DTPD). 2,2,4-trimethyl-1,2-dihydroquinoline polymers can be synthesized from aniline by feeding acetone, as needed, at a temperature of 80-150°C, e.g., 140°C, in the presence of an acidic catalyst. See, e.g., U.S. Pat. No. 4,746,743 A. Aniline also reacts with hydroquinone to yield DTPD. Hydroquinone can be formed by the dialkylation of benzene with propene to give 1,4-diiopropylbenzene. This compound reacts with air to afford the bis(hydroperoxide), which rearranges in acid to give acetone and hydroquinone.

### Synthesis of Reinforcement Materials (S122)

Ethylene glycol and p-terephthalic acid can be used as monomers for synthesis of PET, while hexamethylene diamine and adipic acid can be used for synthesis of polyamides, such as one or more of the known forms of Nylon, e.g., Nylon 6,6 or Nylon 1,6. These materials can be used in the manufacture of tire reinforcements 38.

The exemplary method of recycling ELT tires has broad impact to multiple categories of materials use in tires (polymer, filler, additives, reinforcement) and can dramatically increase the degree of circularity in tires without negative impact on tire performance. Further, use of such recycled raw materials can significantly reduce global carbon emission and help achieve carbon emission reduction goals. The rubbers, fillers, chemicals, resins, oils and waxes which can be produced from the hydrothermal cracking of ELTs have at least comparable quality to that of corresponding fossil-fuel based raw materials.

### Forming a new tire (S124)

The rubber-forming additives for a tire and the synthetic rubbers for a tire obtained as described above may be used for preparing rubber compositions for a tire or portion(s) thereof (e.g., treads, sidewalls, etc.).

An example tire-forming composition 40 may include one or more synthetic rubbers 32, one or more inorganic fillers, such as carbon black 20 and silica 18, process oil 26, wax 28, resin 34, one or more additives 36, such cure accelerators, antioxidants, and antiozonants, all of which can be derived, at least in part, from the products 14, 16 of the hydrothermal cracking process. Additional components of the rubber composition may include one or more of natural rubber, silane coupling agent(s), zinc oxide, fatty acids, sulfur, and the like.

The rubber composition 40 may be produced by known methods. For example, the rubber composition can be produced by kneading the components with a rubber kneader such as an open roll mill, a Banbury mixer, and an internal mixer, and shaping and vulcanizing the resulting mixture to form a tire component.

A pneumatic tire can be produced by a conventional method using the rubber composition. Specifically, an unvulcanized rubber composition containing the components described above is extruded and processed into the shape of a tire component, and then subjected to molding on a tire building machine to form an unvulcanized tire. The tire component, such as a tread, may incorporate reinforcing materials 38, produced from the oil derived from the hydrothermal cracking of waste tires. Thereafter, the unvulcanized tire is subjected to heat and pressure in a vulcanizer to produce a tire.

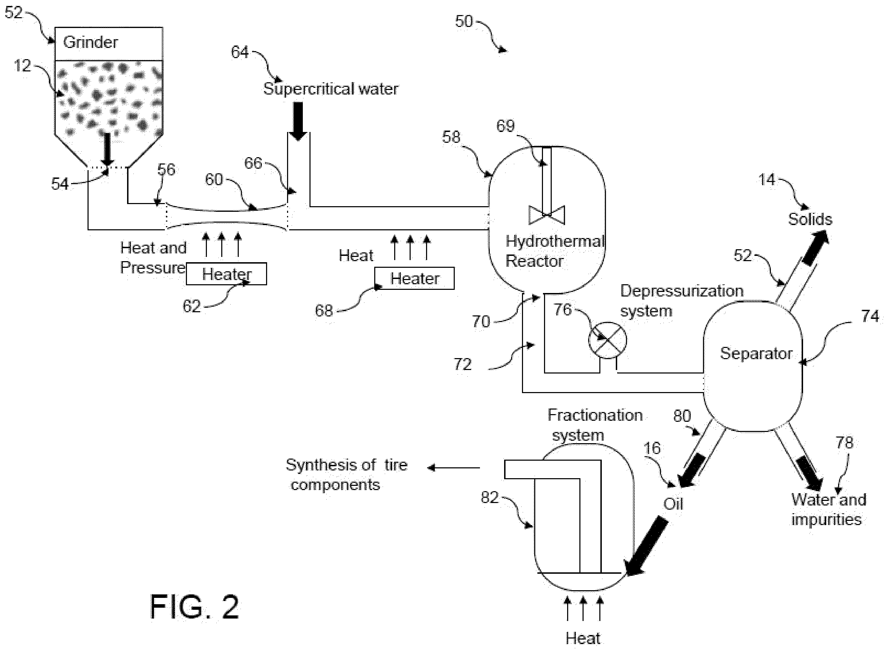

In FIGURE 2, a system 50 for recycling waste tires is illustrated. The system includes a grinder 52, which grinds the waste tires into crumbs, which may be mixed with a carrier fluid, such as water, to form a feedstock 12. The grinder includes an outlet 54, through which the feedstock is delivered to a conduit 56, which transports the feedstock 12 to a hydrothermal reactor 58. The feedstock is pressurized by a constriction 60 in the conduit 56, and heated in the conduit by a heater 62. The feedstock 12 is mixed with supercritical water 64, which is introduced to the conduit through a high pressure pipe 66. An additional heater 68 may heat the conduit, downstream of the pipe 64.

The mixture of feedstock and supercritical water is maintained in the reactor 58 at a sufficient temperature, e.g., at least 350°C, and pressure, e.g., at least 18,000 kPa, to maintain the water in a supercritical state for sufficient time to convert the feedstock into reaction products, in particular oil and solid residues. The reactor 58 may be a constant flow type reactor or a batch type reactor.

The reactor 58 may be capable of withstanding pressures of up to 30,000 kPa, or 35,000 kPa, and temperatures of up to 500°C, or up to 800°C, or more. The reactor may be fitted with a heater (not shown) and a stirrer 69, e.g., with a variable speed of up to 700 rpm, or up to 800 rpm, or higher, to provide thorough mixing in the reactor.

The mixture exits the reactor 58 through an outlet 70 into a conduit 72, which is connected to a separator 74. The pressure of the mixture leaving the reactor may be rapidly reduced by a depressurization system 76, in or connected with the conduit 72. One exemplary depressurization system is described in US Pub. No. 20120227822 A1. The separator 74 separates the mixture into constituents, generally oil 16, solids 14, and water 78 carrying impurities. If solid particles are present in the oil 16, following separation, these may be removed by a filtration unit (not shown). The oil 16 is transported through a conduit 80 to a fractionation system 82, where it is separated into two or more fractions 22, 24, covering different fractionation temperature ranges, e.g., by steam cracking. The fractionation system 82 may be equipped with a batch distillation column, which is designed and calibrated according to ASTM D2892-20, "Standard Test Method for Distillation of Crude Petroleum (15-Theoretical Plate Column)". The heavier compounds, such as the waxy fraction 28 can be fractioned according to ASTM D5236-18a, "Standard Test Method for Distillation of Heavy Hydrocarbon Mixtures (Vacuum Potstill Method)", under strong vacuum and at a higher top temperature without reflux.

These fractions may be processed as described with respect to FIG. 1.

## Claims

1. A method of recycling waste tires. the method comprising:
subjecting a waste tire material (12) to a hydrothermal cracking process to generate a solid component (14) and a fluid component (16), the fluid component (16) comprising oil and water;
recovering at least one filler material from the solid component (14), the at least one filler material being selected from carbon black (20), silica (18), and mixtures thereof;
fractionating the oil in the fluid component (16) to generate at least two oil fractions;
refining at least a first portion of a first of the oil fractions to isolate at least one of a wax (28) and a process oil (26);
optionally, using at least a second portion of the first of the oil fractions as a feedstock for forming carbon black (20);
steam cracking a second of the oil fractions to form precursors (30) for forming components of rubber tire; and
forming the components of the tire from the precursors (30), the least one filler material (18, 20) and the at least one the wax (28) and the process oil (26), whereby at least 50 wt. % of a new tire is derived from the waste tire material.

2. The method of claim 1, wherein at least 80 wt. % of the new tire is derived from the waste tire material (12).

3. The method of claim 1 or 2, wherein the waste tire material (12) consists of shredded tires (10).

4. The method of at least one of the previous claims, wherein the hydrothermal cracking process is carried out in a reactor (58) at a temperature of at least 500°C and/or of up to 750°C; and at a pressure of at least 18,000 kPa.

5. The method of at least one of the previous claims, wherein the hydrothermal cracking process uses no catalyst other than water.

6. The method of at least one of the previous claims, wherein the first of the oil fractions has an Atmospheric Equivalent Temperature (AET) of at least 350°C and the second of the oil fractions has an AET of below 350°C.

7. The method of at least one of the previous claims, wherein the precursors (30) comprise a conjugated diene and/or wherein the forming of the components of the tire comprises synthesizing a synthetic rubber from the precursors (30).

8. The method of at least one of the previous claims, wherein the forming of the components of the tire comprises synthesizing a resin (34) from the precursors (30) and/or wherein the forming of the components of the tire comprises synthesizing at least one of an antioxidant, an antiozonant, and a curative from the precursors (30).

9. The method of at least one of the previous claims, wherein the synthesis of the antioxidant comprises synthesizing at least one of aniline and an alkyl-substituted aniline from the precursors (30) and synthesizing 4-aminodiphenylamine from the at least one of the aniline and the alkyl-substituted aniline.

10. The method of at least one of the previous claims, wherein the forming of the components of the tire comprises synthesizing a reinforcement material from the precursors (30), wherein the reinforcement material preferably comprises at least one of polyethylene terephthalate and Nylon.

11. The method of at least one of the previous claims, wherein the forming the components of the tire comprises forming a tire tread.

12. An apparatus for recycling waste tires, the apparatus comprising:
a grinder (52) which is configured for grinding waste tires or parts thereof to form a waste tire material;
a hydrothermal cracking reactor (58) which is configured for converting the waste tire material to a mixture comprising a solid component and a fluid component, the fluid component including oil and water;
a depressurizing component (76) which is configured for reducing a temperature and a pressure of the fluid component;
a separator (74) which is configured for separating the oil from the water in the fluid component;
a fractionating system (82) which is configured for fractionating the oil to generate at least two oil fractions, a first of the oil fractions being suitable for producing a process oil and a wax, a second of the oil fractions being suitable for producing precursors for forming components of a rubber tire;
a heated conduit (56) which connects the grinder (52) and the hydrothermal cracking reactor (58), the heated conduit (56) having a constriction (60) in the conduit (56); and
an inlet in the form of a high pressure pipe (66) to the heated conduit (56) by which superheated water can be mixed with the waste tire material.

## Patentansprüche

1. Verfahren zum Recycling von Altreifen, wobei das Verfahren das Folgende umfasst:
das Unterziehen eines Altreifenmaterials (12) einem hydrothermischen Crackprozess, um eine feste Komponente (14) und eine flüssige Komponente (16) zu erzeugen; wobei die flüssige Komponente (16) Öl und Wasser umfasst;
das Zurückgewinnen mindestens eines Füllstoffs aus der festen Komponente (14); wobei der zumindest eine Füllstoff aus Ruß (20), Siliziumdioxid (18) sowie deren Mischungen ausgewählt ist;
das Fraktionieren des Öls in der flüssigen Komponente (16), um mindestens zwei Ölfraktionen zu erzeugen;
das Raffinieren mindestens einer ersten Ölfraktion unter den Ölfraktionen, um mindestens ein Element zu isolieren, das aus einem Wachs (28) und einem Prozessöl (26) ausgewählt ist;
optional das Verwenden mindestens einer zweiten Ölfraktion unter den Ölfraktionen als Einsatzmaterial zur Erzielung von Ruß (20);
das Dampfkracken einer zweiten der Ölfraktionen zur Erzielung von Vorläufern (30) für die Herstellung von Bestandteilen eines Kautschukreifens; und
das Herstellen der Bestandteile des Reifens aus den Vorläufern (30), nämlich des mindestens einen Füllstoffs (18, 20) sowie des mindestens einen Wachses (28) und des Prozessöls (26); wobei mindestens 50 Gew.-% eines neuen Reifens aus dem Altreifenmaterial stammen.

2. Verfahren nach Anspruch 1, wobei mindestens 80 Gew.-% des neuen Reifens aus dem Altreifenmaterial (12) stammen.

3. Verfahren nach Anspruch 1 oder 2, wobei das Altreifenmaterial (12) aus zerkleinerten Reifen (10) besteht.

4. Verfahren nach mindestens einem der vorstehenden Ansprüche, wobei der hydrothermische Crackprozess in einem Reaktor (58) bei einer Temperatur von mindestens 500 °C und/oder bis zu 750 °C und unter einem Druck von mindestens 18.000 kPa durchgeführt wird.

5. Verfahren nach mindestens einem der vorstehenden Ansprüche, wobei bei dem hydrothermischen Crackverfahren ausschließlich Wasser als Katalysator verwendet wird.

6. Verfahren nach mindestens einem der vorstehenden Ansprüche, wobei die erste Ölfraktion unter den Ölfraktionen eine atmosphärische Äquivalenz-Temperatur (AET) hat, die mindestens 350 °C beträgt und die zweite Ölfraktion unter den Ölfraktionen eine AET hat, die weniger als 350 °C beträgt.

7. Verfahren nach mindestens einem der vorstehenden Ansprüche, wobei die Vorläufer (30) ein konjugiertes Dien umfassen und/oder wobei die Herstellung der Bestandteile des Reifens die Synthese eines synthetischen Kautschuks aus den Vorläufern (30) umfasst.

8. Verfahren nach mindestens einem der vorstehenden Ansprüche, wobei die Herstellung der Bestandteile des Reifens die Synthese eines Harzes (34) aus den Vorläufern (30) umfasst und/oder wobei die Herstellung der Bestandteile des Reifens die Synthese mindestens eines aus einem Antioxidationsmittel, einem Ozonschutzmittel und einem Vulkanisationsmittel bestehenden Elements aus den Vorläufern (30) umfasst.

9. Verfahren nach mindestens einem der vorstehenden Ansprüche, wobei die Synthese des Antioxidationsmittels das Synthetisieren mindestens eines aus Anilin und einem mit einer oder mehreren Alkylgruppen substituierten Anilin ausgewählten Elements aus den Vorläufern (30) und das Synthetisieren eines 4-Aminodiphenylamins aus dem mindestens einen Anilin und dem mit einer oder mehreren Alkylgruppen substituierten Anilin, umfasst.

10. Verfahren nach mindestens einem der vorstehenden Ansprüche, wobei die Herstellung der Bestandteile des Reifens die Synthese eines Verstärkungsmaterials aus den Vorläufern (30) umfasst; wobei das Verstärkungsmaterial vorzugsweise mindestens ein Element umfasst, das aus Polyethylenterephthalat und Nylon ausgewählt ist.

11. Verfahren nach mindestens einem der vorstehenden Ansprüche, wobei die Herstellung der Bestandteile des Reifens die Herstellung einer Lauffläche für den Reifen umfasst.

12. Vorrichtung zum Recycling von Altreifen, wobei die Vorrichtung Folgendes umfasst:
einen Zerkleinerer (52), der zum Zerkleinern von Altreifen oder Teilen davon ausgelegt ist, um Altreifenmaterial herzustellen;
einen hydrothermischen Crackreaktor (58), der dazu ausgelegt ist, das Altreifenmaterial in ein Gemisch umzuwandeln, das eine feste Komponente und eine flüssige Komponente umfasst; wobei die flüssige Komponente Öl und Wasser umfasst;
eine Entspannungskomponente (76), die dazu ausgebildet ist, die Temperatur und den Druck der flüssigen Komponente zu reduzieren;
einen Abscheider (74), der dazu ausgebildet ist, das Öl vom Wasser in der Fluidkomponente abzutrennen;
ein Fraktionierungssystem (82), das dazu ausgebildet ist, das Öl zu fraktionieren, um mindestens zwei Ölfraktionen zu erzeugen; wobei eine erste Ölfraktion unter den Ölfraktionen geeignet ist, um ein Prozessöl und ein Wachs zu erzielen; wobei eine zweite Ölfraktion unter den Ölfraktionen geeignet ist, um Vorläufer zu erzielen, die dazu bestimmt sind, Bestandteile des Reifens zu bilden;
eine beheizte Leitung (56), die den Zerkleinerer (52) mit dem hydrothermischen Crackreaktor (58) verbindet; wobei die beheizte Leitung (56) eine Verengung (60) aufweist; und
einen Einlass in Form eines Hochdruckrohrs (66), das in die beheizte Leitung (56) mündet, durch den überhitztes Wasser mit dem Altreifenmaterial gemischt werden kann.

## Revendications

1. Procédé destiné au recyclage de bandages usagés ; dans lequel le procédé comprend le fait de :
soumettre un matériau (12) issu de bandages usagés à un processus de craquage hydrothermique dans le but de générer un composant solide (14) et un composant fluide (16) ; dans lequel le composant fluide (16) comprend de l'huile et de l'eau ;
récupérer au moins une matière de charge à partir du composant solide (14) ; dans lequel ladite au moins une matière de charge est choisie parmi du noir de carbone (20), de la silice (18), ainsi que leurs mélanges ;
fractionner l'huile dans le composant fluide (16) dans le but de générer au moins deux fractions d'huile ;
raffiner au moins une première portion d'une première fraction d'huile parmi les fractions d'huile dans le but d'isoler au moins un élément choisi parmi une cire (28) et une huile de procédé (26) ;
de manière facultative, utiliser au moins une deuxième portion de la première fraction d'huile parmi les fractions d'huile comme charge d'alimentation dans le but d'obtenir du noir de carbone (20) ;
soumettre à un craquage à la vapeur une deuxième fraction d'huile parmi les fractions d'huile dans le but d'obtenir des précurseurs (30) pour l'obtention de composants d'un bandage en caoutchouc ; et
préparer les composants du bandage à partir des précurseurs (30), à savoir ladite au moins une matière de charge (18, 20), ainsi que ladite au moins une cire (28) et l'huile de procédé (26) ; dans lequel au moins 50 % en poids d'un nouveau bandage proviennent du matériau issu de bandages usagés.

2. Procédé selon la revendication 1, dans lequel au moins 80 % en poids du nouveau bandage proviennent du matériau (12) issu de bandages usagés.

3. Procédé selon la revendication 1 ou 2, dans lequel le matériau (12) issu de bandages usagés est constitué par des bandages déchiquetés (10).

4. Procédé selon au moins une des revendications précédentes, dans lequel le processus de craquage hydrothermique est mis en œuvre dans un réacteur (58) à une température d'au moins 500 °C et/ou qui atteint 750 °C, et sous une pression d'au moins 18.000 kPa.

5. Procédé selon au moins une des revendications précédentes, dans lequel le processus de craquage hydrothermique n'utilise rien d'autre que l'eau pour faire office de catalyseur.

6. Procédé selon au moins une des revendications précédentes, dans lequel la première fraction d'huile parmi les fractions d'huile possède une température équivalente atmosphérique (TEA) qui s'élève à au moins 350 °C et la deuxième fraction d'huile parmi les fractions d'huile possède une TEA qui est inférieure à 350 °C.

7. Procédé selon au moins une des revendications précédentes, dans lequel les précurseurs (30) comprennent un diène conjugué et/ou dans lequel la préparation des composants du bandage comprend le fait de synthétiser un caoutchouc synthétique à partir des précurseurs (30).

8. Procédé selon au moins une des revendications précédentes, dans lequel la préparation des composants du bandage comprend le fait de synthétiser une résine (34) à partir des précurseurs (30) et/ou dans lequel la préparation des composants du bandage comprend le fait de synthétiser au moins un élément qui est choisi parmi un antioxydant, un agent antiozone et un agent de vulcanisation à partir des précurseurs (30).

9. Procédé selon au moins une des revendications précédentes, dans lequel la synthèse de l'antioxydant comprend le fait de synthétiser au moins un élément qui est choisi parmi l'aniline et une aniline substituée par un ou plusieurs groupes alkyle à partir des précurseurs (30) et le fait de synthétiser une 4-aminodiphénylamine à partir de ladite au moins une aniline et de l'aniline substituée par un ou plusieurs groupes alkyle.

10. Procédé selon au moins une des revendications précédentes, dans lequel la préparation des composants du bandage comprend le fait de synthétiser une matière de renforcement à partir des précurseurs (30) ; dans lequel la matière de renforcement comprend de préférence au moins un élément qui est choisi parmi du polyéthylène téréphtalate et du Nylon.

11. Procédé selon au moins une des revendications précédentes, dans lequel la préparation des composants du bandage comprend le fait de préparer une bande de roulement de bandage.

12. Appareil destiné au recyclage de bandages usagés ; dans lequel l'appareil comprend :
un broyeur (52) qui est configuré pour le broyage de bandages usagés ou de parties de ces derniers dans le but de préparer un matériau issu de bandages usagés ;
un réacteur de craquage hydrothermique (58) qui est configuré pour transformer le matériau issu de bandages usagés en un mélange qui comprend un composant solide et un composant fluide ; dans lequel le composant fluide comprend de l'huile et de l'eau ;
un composant de détente (76) qui est configuré pour réduire une température et une pression du composant fluide ;
un séparateur (74) qui est configuré pour séparer l'huile de l'eau dans le composant fluide ;
un système de fractionnement (82) qui est configuré pour fractionner l'huile dans le but de générer au moins deux fractions d'huile ; dans lequel une première fraction d'huile parmi les fractions d'huile est appropriée pour obtenir une huile de procédé et une cire ; dans lequel une deuxième fraction d'huile parmi les fractions d'huile est appropriée pour obtenir des précurseurs qui sont destinés à la formation de composants d'un bandage en caoutchouc ;
un conduit chauffé (56) qui relie le broyeur (52) et le réacteur de craquage hydrothermique (58) ; dans lequel le conduit chauffé (56) possède un rétrécissement (60) dans le conduit (56) ; et
une entrée sous la forme d'un tuyau à haute pression (66) qui mène au conduit chauffé (56), par laquelle de l'eau surchauffée peut être mélangée au matériau issu de bandages usagés.
